# EUROPEAN PATENT APPLICATION

(11) **EP 3 040 507 A1**
(43) Date of publication of application: **06.07.2016**
(21) Application number: 14200482.9
(22) Date of filing: 29.12.2014
(51) Int. Cl.: E21B 47/10, E21B 47/00, G01N 29/14, G01F 1/74

(54) **Method and system for tracking slugs in oilfield tubulars**

(71) Applicant: Shell Internationale Research Maatschappij B.V., 2596 HR Den Haag (NL)
(72) Inventor: IN'T PANHUIS, Petrus Hendrikus Maria Wilhelmus, 2288 GS Rijswijk (NL)
(74) Representative: Matthezing, Robert Maarten

(57) **Abstract**

A method for tracking fluid and/or thermal slugs in a well or other oilfield tubular comprises:
- bonding a fiber optical Distributed Acoustic Sensing (DAS) cable to the tubular;
- inducing the DAS cable to monitor flow-induced vibrations in the wall of the tubular;
- filtering the monitored vibrations to a frequency band that correlates to a thermal and/or fluid slug regime;
- monitoring velocities of the thermal and/or fluid slugs on the basis of the filtered monitored vibrations; and
- optionally converting the monitored slug velocities into bulk flow rates and allocating changes in flow rate to inflow our outflow from reservoir intervals.

## Description

### BACKGROUND OF THE INVENTION

The invention relates to a method system for tracking fluid and/or thermal slugs in well and other oilfield tubulars.

Most natural oil wells, even from dry-oil reservoirs, have a tendency to produce at a fully developed slug flow regime at the well head mainly due to gas breakout in the riser section of the well. Monitoring the gross gas and liquid production is required to allow the operator to better manage their reservoirs and optimize production.

Currently available multiphase flowmeters are complex and expensive pieces of equipment and require fluid conditioning and/or fluid separation downhole and comprise venturi flow restrictions that induce a significant pressure drop.

Examples of currently available multiphase flowmeters for use in oilfield tubulars are a Fibre Optic flowmeter of Weatherford and downhole Venturi flow meters, which comprise pressure gauges at the entrance and neck portion of a venturi insert.

Both solutions are single-point spool-piece type flowmeters, and are commercially available.

The Weatherford flowmeter is a non-intrusive multiphase flowmeter which is often used in conjunction with a gradiometer. The instrument has a limited operating range and is very expensive. The Venturi meter is much less expensive, but is in nature a single-phase flowmeter. The intrusive character of the meter and its limited operating range makes the Venturi flowmeter less attractive.

Traditionally slugs are monitored by cross correlating pressure fluctuations measured by pressure transducers. Traditional slug tracking methods have the limitation that there are typically only a limited number of measurements that can be correlated, especially downhole.

Thus, there is a need for an improved method and system for tracking fluid slugs in oil and/or gas well and other oilfield tubulars.

### SUMMARY OF THE INVENTION

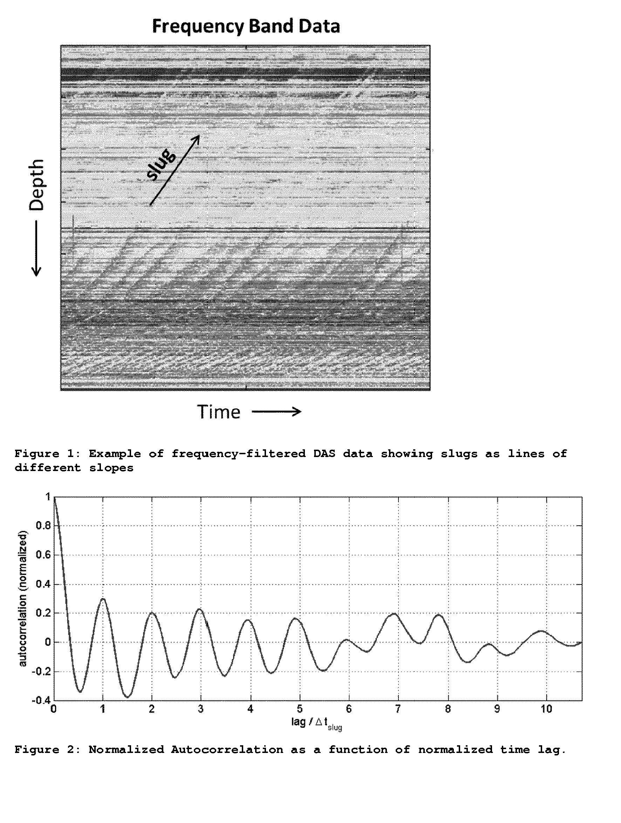

In accordance with the invention there is provided a method for tracking slugs in an oilfield tubular comprising the steps of:
- arranging a fiber optical Distributed Acoustic Sensing(DAS) cable along at least part of the length of the well tubular such that acoustic contact is created between at least a substantial part of the length of the fiber optical DAS cable and of the well tubular;
- inducing the DAS cable to monitor flow-induced pipe vibrations in the wall of the well tubular;
- filtering the monitored vibrations to a frequency band that correlates to a slug flow regime, which step is illustrated in Figure 1; and
- monitoring the movement of the liquid and/or gas slugs on the basis of the filtered vibrations, which step is also illustrated in Figure 1.

Optionally, the method further comprises the steps of:
- dividing noise records of the flow induced pipe vibrations into time-segments of a selected length, which length is selected long enough such that at least one time-segment covers at least two slugging periods;
- for each time segment convert raw DAS data into noise amplitudes within a selected frequency band and a selected time resolution; and
- applying auto-correlation to the processed data to determine whether there is a slugging regime and what is the slug frequency, which step is illustrated in Figure 2.

The method according to the invention may be used to track fluid slugs in a downhole, subsea, buried or surface oilfield tubular through which a multiphase well effluent mixture flows in a slug flow regime and to manage and optimize the production of the well effluent mixture and/or for tracking thermal (for example low-frequency) slugs in an oilfield tubular, through which a single-phase liquid or other fluid is injected at a different temperature from the existing well effluents in the oilfield tubular and may further comprise gathering segments of noise records from a selected number of longitudinally spaced sections of the fiber optical DAS cable, such that fluid or thermal slug velocity may be assumed constant across these sections.

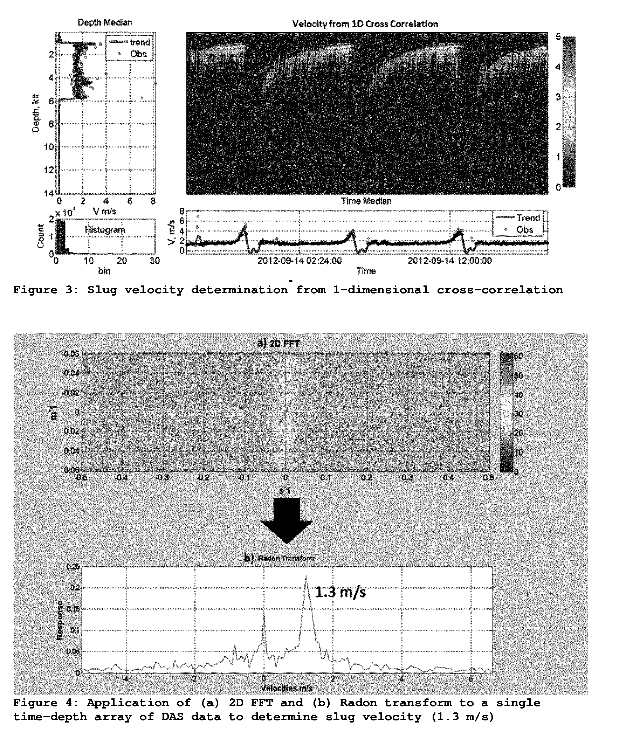

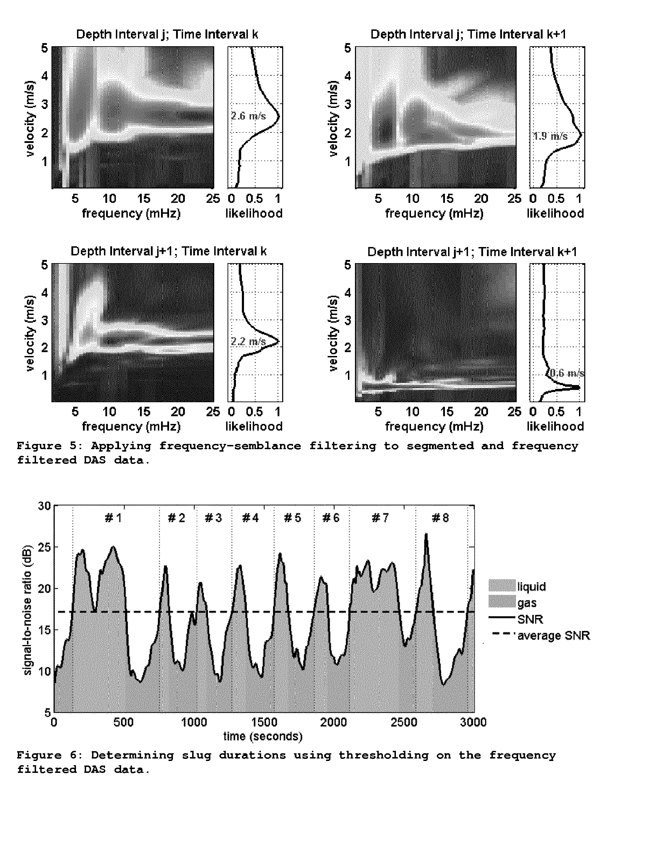

The method according to the invention may further comprise:
- determining the slug velocity, from 1-dimensional cross-correlation, as illustrated in Figure 3, 2-dimensional Fourier transform in combination with a Radon transform, as illustrated in Figure 4, or from a frequency semblance plot, as illustrated in Figure 5, using knowledge of previously computed slug frequency; and
- using thresholding on the noise level to determine average lengths of slugs for each gathering of receivers, as illustrated in Figure 6.

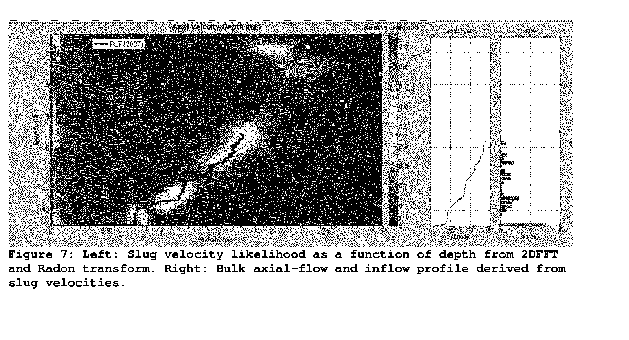

The method according to the invention may further comprise:
- multiplying the slug velocities with the cross-sectional area of the tubular to derive bulk flow rates; and
- allocating the changes in bulk flow rate to inflow or outflow from reservoir intervals that the slugs are passing by, as illustrated in Figure 7.

Optionally, the selected values may be iteratively updated as more data regarding the slugging regime and the lengths and velocity of the fluid slugs is gathered and the computed slug characteristics may be used to extrapolate when slugs will reach a downstream end of the oilfield tubular and to compute gross liquid and gas flow rates.

The oilfield tubular may be a production tubing in a hydrocarbon fluid production well or a hydrocarbon fluid production pipeline that is arranged between a wellhead of a hydrocarbon fluid production well and a hydrocarbon fluid processing and/or separating facility, which pipeline may follow an irregular trajectory with a number of peaks and/or troughs in which a slug flow regime is initiated from time to time if the well effluents comprise a mixture of crude oil and natural gas.

These and other features, embodiments and advantages of the method according to the invention are described in the accompanying claims, abstract and the following detailed description of non-limiting embodiments depicted in the accompanying drawings, in which description reference numerals are used which refer to corresponding reference numerals that are depicted in the drawings. Similar reference numerals in different figures denote the same or similar objects.

### BRIEF DESCRIPTION OF THE DRAWINGS

Figure 1 is a screenshot of frequency-filtered DAS data presented as a function of time and depth in which slugs can be detected as lines of constant or slowly varying slopes.
Figure 2 shows the autocorrelation of a single DAS channel that experiences slugging.
Figure 3 shows the time-depth slug velocity map in a tight gas well determined using 1D cross-correlation of frequency filtered DAS recordings at neighboring DAS depths.
Figure 4 shows (a) the application of the two-dimensional Fourier transform to an array of frequency filtered DAS data and (b) the transformation of the two-dimensional Fourier transform to the most likely slug velocity by application of the Radon transform.
Figure 5 shows frequency-velocity maps determined from different arrays of frequency filtered DAS data using frequency semblance filtering.
Figure 6 shows how the duration of the liquid and gaseous parts of slugs can be determined by thresholding on the amplitude of the frequency filtered DAS recordings.
Figure 7, on the left, shows the depth-velocity map determined by applying subsequently the two-dimensional Fourier transform and the Radon transform to DAS data that was divided in multiple depth segments.

### DETAILED DESCRIPTION OF THE DEPICTED EMBODIMENTS

Key features of the method according to the invention are how the velocity and/or slugging regime is detected and how the measured slugging data are processed.

The method according to the invention measures strain variations in the pipe wall as a result of flow-induced and/or thermally induced pipe vibrations using for example a Distributed Acoustic Sensing (DAS) technique, wherein an optical fiber is bonded to the pipe wall along a substantial part of its length and pipe vibrations are converted into DAS signals reflected at each point along the length of the optical fiber, which signals are monitored and interpreted by a DAS interrogation assembly. The invention then converts the raw data into noise amplitudes and filters the data to specific frequency bands that correlate best to the slug flow. These noise levels are then correlated to monitor the slugs.

Relevant details of the method according to the invention are depicted in the accompanying drawings and described in more detail below.

Figure 1 is a screenshot of a computer display that shows an image of frequency-filtered DAS data presented as a function of time and depth in which slugs can be detected as lines of constant or slowly varying slopes. The high amplitudes are dark shaded and indicate high liquid hold-up, whereas the low amplitudes are light shaded and are an indication of low liquid hold-up.

Figure 2 shows the autocorrelation of a single DAS channel that experiences slugging. The autocorrelation will show peaks at time lags that are discrete multiples of the main slugging period. The slug frequency can be determined as the inverse of the slugging period.

Figure 3 shows the time-depth slug velocity map in a tight gas well determined using 1D cross-correlation of frequency filtered DAS recordings at neighboring DAS depths.

Figure 4 shows (a) the application of the two-dimensional Fourier transform to an array of frequency filtered DAS data and (b) the transformation of the two-dimensional Fourier transform to the most likely slug velocity by application of the Radon transform.

Figure 5 shows frequency-velocity maps determined from different arrays of frequency filtered DAS data using frequency semblance filtering. The dominant slug velocity is determined by averaging across all frequency components.

Figure 6 shows how the duration of the liquid and gaseous parts of slugs can be determined by thresholding on the amplitude of the frequency filtered DAS recordings. Slug lengths can be determined by multiplying the slug durations with the previously computed slug velocities.

Figure 7, on the left, shows the depth-velocity map determined by applying subsequently the two-dimensional Fourier transform and the Radon transform to DAS data that was divided in multiple depth segments. On the right, bulk axial-flow and inflow rates are shown that are derived from the most likely slug velocities given in the depth-velocity map.

With the DAS fluid and/or thermal slug tracking system according to the invention a noise measurement may be recorded every 1 meter, so that slugs can be tracked quite accurately along several kilometres of pipe sections. As a result much earlier and better slug predictions are possible. Moreover, it is possible to pinpoint exactly where in the pipe the slugs originate.

The presence of slug flow is detected as strong peaks for a nonzero lag in the autocorrelation plots. For stable slug flow multiple peaks will be observed at constant multiples of the base slug period.

The passing of a liquid slug is characterized by an increase in noise for the entire duration of the slug. The slug velocities will therefore app of the gaseous slug is found by tracking how long the noise levels stays below the threshold.

Initially, at the onset of slugging, slug characteristics will be determined in a section far downhole, which can be used to predict when the slugs will reach surface. As time progresses, and slugs travel up the well, local variations in slug characteristics closer to surface can also be determined, which can be used to update the predictions. Similarly, changes in slug characteristics as a result of valve changes can also be monitored as strong peaks for nonzero lags in the cross-correlation plots of combinations of receivers. The length of the liquid slug can then be determined by tracking how long the noise levels stay above a suitably chosen threshold.

## Claims

1. A method for tracking slugs in an oilfield tubular, the method comprising:
- arranging a fiber optical Distributed Acoustic Sensing(DAS) cable along at least part of the length of the tubular such that acoustic contact is created between at least a substantial part of the length of the fiber optical DAS cable and of the tubular;
- inducing the DAS cable to monitor flow-induced pipe vibrations in the wall of the tubular;
- filtering the monitored vibrations to a frequency band that correlates to a slug flow regime; and
- monitoring the movement of the slugs on the basis of the filtered vibrations.

2. The method of claim 1, wherein the method is used to track fluid slugs in a downhole, subsea, buried or surface oilfield tubular through which a multiphase well effluent mixture flows in a slug flow regime and to manage and optimize the production of the well effluent mixture via the oilfield tubular.

3. The method of claim 1, wherein the method to track thermal slugs in an oilfield tubular into which a fluid is injected into a well effluent mixture and the injected fluid has another temperature than the well effluent mixture.

4. The method of claim 3, wherein the injected fluid is a single phase liquid and the thermal slugs are low-frequency slugs having a frequency less than 1 Hz.

5. The method of any one of claims 1-4, wherein the method further comprises the steps of:
- dividing noise records of the flow induced pipe vibrations into time-segments of a selected length, which length is selected long enough such that at least one time-segment covers at least two slugging periods;
- for each time segment convert raw DAS data into noise amplitudes within a selected frequency band and a selected time resolution; and
- applying auto-correlation to the processed data to determine whether there is a slugging regime and what is the slug frequency.

6. The method of claim 5, wherein the method further comprises gathering time segments of noise records from a selected number of longitudinally spaced sections of the fiber optical DAS cable, such that slug velocity may be assumed constant across these sections.

7. The method of claim 5 or 6, wherein the method further comprises:
- using knowledge of previously computed slug frequency to determine the slug velocity from 1-dimensional cross-correlation, 2-dimensional Fourier transform, or from a frequency semblance plot; and
- using thresholding on the noise level to determine average lengths of slugs for each gathering of receivers.

8. The method of any one of claims 5-7, wherein the selected values are iteratively updated as more data regarding the slugging regime and the lengths and velocity of the fluid slugs is gathered.

9. The method of any one of claims 1-8, wherein the computed slug characteristics are used to extrapolate when slugs will reach a downstream end of the oilfield tubular and to compute gross liquid and gas flow rates.

10. The method of any one of the claims 1-9, wherein the changes in bulk flow rates are attributed to inflow or outflow from reservoir intervals that the slugs are passing by.

11. The method of any one of claims 1-10, wherein the oilfield tubular is a production tubing in a hydrocarbon fluid production well and the method comprises converting the monitored slug velocities into bulk flow rates and allocating changes in flow rate to inflow our outflow from reservoir intervals.

12. The method of any one of claims 1-10, wherein the oilfield tubular is a hydrocarbon fluid production pipeline that is arranged between a wellhead of a hydrocarbon fluid production well and a hydrocarbon fluid processing and/or separating facility.

13. The method of claim 12, wherein the hydrocarbon fluid production pipeline follows an irregular trajectory with a number of peaks and/or troughs in which a slug flow regime is initiated from time to time if the well effluents comprise a mixture of crude oil and natural gas.

14. A system for tracking slugs in an oilfield tubular, the system comprising:
- a fiber optical Distributed Acoustic Sensing(DAS) cable arranged along at least part of the length of the oilfield tubular such that acoustic contact is created between at least a substantial part of the length of the fiber optical DAS cable and of the oilfield tubular and the DAS cable is configured to monitor flow-induced pipe vibrations in the wall of the oilfield tubular;
- means for filtering the monitored vibrations to a frequency band that correlates to a slug flow regime; and
- means for monitoring the movement of the slugs on the basis of the filtered vibrations.

15. The system of claim 14, wherein the system is configured to track fluid slugs in an oilfield tubular through which a multiphase well effluent mixture flows in a slug flow regime and/or to track thermal slugs in an oilfield tubular through which a fluid is injected at a different temperature from the existing well effluents and further comprises:
- means for dividing noise records of the flow induced pipe vibrations into time-segments of a selected length, which length is selected long enough such that at least one time-segment covers at least two slugging periods;
- for each time segment means for converting raw DAS data into noise amplitudes within a selected frequency band and a selected time resolution; and
- means for applying auto-correlation to the processed data to determine whether there is a slugging regime and what is the slug frequency.
